# EUROPEAN PATENT APPLICATION

(11) **EP 4 613 786 A1**
(43) Date of publication of application: **10.09.2025**
(21) Application number: 23886129.8
(22) Date of filing: 25.10.2023
(51) Int. Cl.: C08F 220/18, C08F 212/08, C08F 222/40, C08F 220/44, C08F 2/00, C08F 2/18, C08F 2/44, C08K 5/09, C08K 5/098, C08K 3/26

(54) **METHOD FOR PREPARING COPOLYMER, COPOLYMER PREPARED THEREBY, AND THERMOPLASTIC RESIN COMPOSITION COMPRISING SAME**

(30) Priority: 01.11.2022 KR 20220143360
(71) Applicant: LG CHEM, LTD., Seoul 07336 (KR)
(72) Inventor: HONG, Sung Won, Daejeon 34122 (KR); LEE, Dae Woo, Daejeon 34122 (KR); JU, Min Cheol, Daejeon 34122 (KR); SHIN, Seong Jae, Daejeon 34122 (KR); SHIN, Min Seung, Daejeon 34122 (KR); KIM, In Soo, Daejeon 34122 (KR); SHIN, Chan Ho, Daejeon 34122 (KR)
(74) Representative: Goddar, Heinz J.
(86) International application number: PCT/KR2023/016678
(87) International publication number: WO 2024/096433

(57) **Abstract**

The present invention relates to a method of preparing an acrylic-imide copolymer, and the method includes: initiating polymerization by adding a reaction solution, which includes an alkyl (meth)acrylate-based monomer and an aromatic vinyl-based monomer, and a buffer to a reactor (S1); and performing polymerization while continuously adding a monomer solution including an imide-based monomer to the reactor (S2), wherein the monomer solution of step (S2) is continuously added after step (S1) until the polymerization conversion rate is 50% to 75%, and the buffer includes two or more non-phosphate-based buffering agents, and by maintaining pH of the polymer system to prevent the hydrolysis of monomers, the color and heat resistance of the resin may be improved, and by adding monomers in a divided manner, an imbalance in composition between monomer units of the copolymer may be resolved.

## Description

### [Technical Field]

### Cross-Reference to Related Application

This application claims priority to and the benefit of Korean Patent Application No. 2022-0143360, filed on November 01, 2022, the entire contents of which are incorporated herein by reference.

### Technical Field

The present invention relates to a method of preparing an acrylic-imide copolymer with excellent color, a copolymer prepared thereby, and a thermoplastic resin composition including the same.

### [Background Art]

With the development of optical technology in recent years, liquid crystal displays have been required to be thinner, lighter, and larger in the display industry, and in particular, technologies related to wide viewing angle, high contrast, uniform screen display, inhibiting image changes depending on viewing angle, and the like have become a critical issue. Therefore, the required properties of polymer materials used in manufacturing displays are becoming more sophisticated.

Various display technologies such as plasma displays (PDPs), liquid crystal displays (LCDs), and organic EL displays (LEDs) that replace conventional cathode ray tubes (CRTs) have been proposed and commercialized. Meanwhile, various polymer films such as polarizing films, polarizer protective films, retardation films, light guide plates, and plastic substrates are used in these display devices, and the required properties of the polymer material for these displays are becoming more sophisticated.

Currently, the most commonly used display polymer film is a polarizer protective film, tri-acetyl cellulose (TAC), but when used for a long time in high temperatures or high humidity atmospheres, the TAC film has problems such as a decrease in polarization degree, a separation of the polarizer from the film, or a reduction in optical properties. To solve these problems, polymer films based on methyl methacrylate, polystyrene, or polycarbonate have been proposed. These polymer films have excellent heat resistance, but in the case of polystyrene or polycarbonate films, aromatic rings in the polymer cause birefringence during orientation, which adversely affects optical properties, and in the case of methyl methacrylate, although its retardation value is relatively small compared to polystyrene or polycarbonate, it is not sufficient by itself to be applied to optical materials requiring high precision.

In order to solve the above problems, previous researchers have copolymerized methyl methacrylate with various types of monomers, and among them, copolymerization of styrene and maleic anhydride is known to be helpful in increasing heat resistance. However, since copolymers with maleic anhydride have stability problems during molding and their high molding temperatures cause problems such as decomposition and gel formation, there are limitations on their use.

In addition, cyclohexyl maleimide is an environmentally regulated substance, and in particular, when a resin composition was extruded into a film, cyclohexyl maleimide remaining in the resin caused an irritating and harmful odor, resulting in a reduction in production efficiency and process instability.

On the other hand, when phenylmaleimide was applied, phenylmaleimide causes a less irritating odor during film extrusion and had improved thermal stability, so there have been attempts to utilize phenylmaleimide. However, due to the difference in reactivity with other monomers, during polymerization, there is a significant difference in composition between the copolymer produced at the beginning of the process and the copolymer at the end of the process, and such imbalance in composition makes it difficult to ensure heat resistance and reduces transparency.

Meanwhile, in the case of transparent heat-resistant resins using suspension polymerization, organic dispersants are commonly used rather than inorganic dispersants in the polymerization. This is because metals contained in inorganic dispersants can remain in the final product and affect transparency. However, as organic dispersants have a low pH when dispersed in water, they can serve as a catalyst during high-temperature polymerization and affect the physical properties of the final polymer. Specifically, since these organic dispersants serve as a catalyst for the hydrolysis of monomers, the content of by-products is increased, leading to color degradation and a reduction in transparency and heat resistance.

Therefore, it is required to develop a technology of preparing a copolymer which has excellent transparency and can relieve the imbalance in monomer compositions while maintaining heat resistance at an excellent level.

### [Related Art Documents]

### [Patent Documents]

(Patent Document 1) KR 1739621 B1

### [Disclosure]

### [Technical Problem]

The present invention is directed to providing a method for preparing an acrylic-imide copolymer that has a small compositional variation between copolymer chains by continuously adding an imide-based monomer to control reactivity between monomers during polymerization, exhibits excellent transparency due to low residual monomer content, and has improved physical properties such as heat resistance and transparency by using a buffer to prevent the hydrolysis of monomers, reduce the residual monomer content, and prevent the generation of by-products.

### [Technical Solution]

In order to solve the above-mentioned problems, the present invention provides a method of preparing an acrylic-imide copolymer including: initiating polymerization by adding a reaction solution, which includes an alkyl (meth)acrylate-based monomer and an aromatic vinyl-based monomer, and a buffer to a reactor (S1); and performing polymerization while continuously adding a monomer solution including an imide-based monomer to the reactor (S2), wherein the monomer solution of step (S2) is continuously added after step (S1) until a polymerization conversion rate is 50% to 75%, and the buffer includes two or more non-phosphate-based buffering agents.

In addition, in order to solve the above-mentioned problems, the present invention provides a thermoplastic resin composition including the acrylic-imide copolymer and a thermoplastic resin prepared by the above-described preparation method.

### [Advantageous Effects]

A method of preparing an acrylic-imide copolymer according to the present invention can provide a copolymer that has a small composition variation between copolymer chains, exhibits excellent transparency and color due to low residual monomer or byproduct contents, and maintains excellent levels of heat resistance and mechanical properties by continuously adding imide-based monomers during polymerization and using a buffer with two or more non-phosphate-based buffering agents.

### [Modes of the Invention]

Hereinafter, the present invention will be described in further detail to help in understanding the present invention.

Terms and words in this specification and claims should not be construed as limited to their conventional or dictionary meanings but should be construed as a meaning and concept consistent with the technical idea of the present invention based on the principle that the inventors can properly define the concept of terms in order to describe their invention in the best way.

Terms and measurement methods used in the present invention may be defined as follows, unless otherwise defined.

The term "composition" used in the present invention includes not only reaction products and decomposition products formed from the material of the composition, but also mixtures of materials including the composition.

The term "monomer unit" used in the present invention may refer to a repeating unit, which is formed when a compound used as a monomer or a compound used as a cross-linking agent participates in a polymerization or cross-linking reaction, a structure derived therefrom, or the substance itself.

The term "derivative" used in the present invention may refer to a compound having a structure in which one or more of the hydrogen atoms constituting the original compound are substituted with a halogen group, an alkyl group, or a hydroxy group.

In the present invention, "polymerization conversion rate" refers to the degree to which monomers are polymerized to form a polymer through a polymerization reaction. After collecting a portion of the polymer in the reactor during polymerization, the weight of the polymer excluding moisture is calculated through Equation 1 below, and then the sample is dissolved in a tetrahydrofuran (THF) solvent and precipitated with methanol (MeOH) to remove unreacted monomers, and the precipitated suspended solid is dried to measure the weight of the polymer, and the polymerization conversion rate is calculated using the following Equation 2. (Actual weight of polymer) = (Weight of collected polymer) - (Weight of collected polymer X moisture content) Polymerization conversion rate (%) = [(Weight of polymer obtained by drying) / (Actual weight of polymer)] X 100

### Preparation method of acrylic-imide copolymer

According to an embodiment of the present invention, a method includes: initiating polymerization by adding a reaction solution, which includes an alkyl (meth)acrylate-based monomer and an aromatic vinyl-based monomer, and a buffer to a reactor (S1); and performing polymerization while continuously adding a monomer solution including an imide-based monomer to the reactor (S2), wherein the monomer solution of step (S2) is continuously added after step (S1) until a polymerization conversion rate is 50% to 75%, and the buffer includes two or more non-phosphate-based buffering agents.

According to an embodiment of the present invention, step (S1) is a step of initiating polymerization, which may include adding the reaction solution to the reactor and then increasing the temperature of the reactor to a predetermined temperature. When the internal temperature of the reactor is above the predetermined temperature even in step (S1), polymerization proceeds in the presence of a polymerization initiator, and according to an embodiment of the present invention, the reaction solution does not need to include an imide-based monomer. When the reaction solution includes an imide-based monomer and participates in polymerization from the beginning, due to the high reactivity of imide-based monomer, an excessive amount of imide-based monomers may be mixed into copolymer chains formed at the beginning of the process, and a relatively small amount of imide-based monomers may be mixed into copolymer chains formed at the end of the process, which may cause an imbalance in composition between copolymer chains and reduce heat resistance.

Therefore, in the preparation method according to an embodiment of the present invention, step (S1) may be performed without an imide-based monomer. In step (S1), the internal temperature of the reactor may be increased to about 60 °C to 120 °C, preferably 70 °C to 110°C, more preferably 80 °C to 110°C, even more preferably 85 °C to 105 °C. In the process of increasing the internal temperature of the reactor in step (S1), the point at which the initial temperature is reached may be when the polymerization conversion rate is 10% or below 10%, specifically below 7%, more specifically below 5%, and in some cases below 3%.

According to an embodiment of the present invention, not only the reaction solution, but also a buffer is mixed to initiate polymerization. The buffer may adjust the pH of polymerization system to control the side reactions or hydrolysis reaction of monomers that may occur when the internal temperature of the reactor is increased. In addition, the buffer includes two or more types of buffering agents, but includes non-phosphate-based buffering agents. In some cases, since phosphate-based buffering agents form an insoluble salt in a water-soluble suspension polymerization system, the physical properties of the copolymer may be reduced, and thus the buffering agent used in the present invention should be a non-phosphate-based buffering agent.

When only one type of buffering agent is used, pH adjustment through hydrogen ion exchange may not be smooth, and in particular, side reactions with a dispersion aid or a molecular weight regulator that is included as an additive in suspension polymerization may occur, which may adversely affect the polymerization reaction.

According to an embodiment of the present invention, the buffering agent may be two or more selected from the group consisting of acetic acid, citric acid, sodium acetate, sodium citrate, sodium carbonate, and sodium bicarbonate. As a preferred example, the combination of the two buffering agents may be a combination of acetic acid and sodium acetate, a combination of citric acid and sodium citrate, or a combination of sodium carbonate and sodium bicarbonate.

According to an embodiment of the present invention, the reaction solution includes an alkyl (meth)acrylate-based monomer and an aromatic vinyl-based monomer.

Specifically, the alkyl (meth)acrylate-based monomer may be one or more selected from the group consisting of methyl (meth)acrylate, ethyl (meth)acrylate, propyl (meth)acrylate, butyl (meth)acrylate, 2-ethylhexyl (meth)acrylate, decyl (meth)acrylate, and lauryl (meth)acrylate, and specifically, the alkyl (meth)acrylate-based monomer may be one or more selected from the group consisting of methyl methacrylate, ethyl methacrylate, butyl methacrylate, methyl acrylate, ethyl acrylate, and butyl acrylate.

The alkyl (meth)acrylate-based monomer may be added in an amount of 40 parts by weight to 95 parts by weight, 50 parts by weight to 85 parts by weight, or 60 parts by weight to 80 parts by weight, based on a total amount of added monomers, and within this range, a copolymer may be obtained with a high polymerization conversion rate, and as the glass transition temperature is easily adjusted, excellent impact strength and transparency may be achieved.

The aromatic vinyl-based monomer may be, for example, one or more selected from the group consisting of styrene, α-methylstyrene, α-ethylstyrene, p-methylstyrene, o-methylstyrene, o-t-butylstyrene, bromostyrene, chlorostyrene, trichlorostyrene, and derivatives thereof, and may be styrene as a specific example.

The aromatic vinyl-based monomer may be added in an amount of 1 part by weight to 50 parts by weight, 3 parts by weight to 40 parts by weight, or 5 parts by weight to 30 parts by weight, based on 100 parts by weight of the total amount of added monomers, and within this range, a copolymer may be obtained with a high polymerization conversion rate, and the mechanical properties of the copolymer may be maintained while controlling the glass transition temperature and improving the compatibility with a thermoplastic resin.

According to an embodiment of the present invention, step (S2) is performed immediately after step (S1), and step (S2) includes performing polymerization while continuously adding a monomer solution including an aromatic vinyl-based monomer or an imide-based monomer to the reactor, and the monomer solution is continuously added after step (S1) until the polymerization conversion rate is 50% to 75%.

According to an embodiment of the present invention, the monomer solution includes an imide-based monomer. Due to high reactivity, the imide-based monomer is easily mixed into copolymer chains, and when it is not properly controlled, a reduction in physical properties may occur due to an imbalance in composition between copolymer chains. Therefore, in the present invention, a portion of the monomer solution including an imide-based monomer is added in batches before the internal temperature of the reactor is increased, and after the temperature is increased, the remainder is continuously added during polymerization.

The monomer solution used in step (S2) is continuously added immediately after step (S1) until the polymerization conversion rate is 50% to 75%. Continuously adding the monomer solution may refer to adding a certain amount for a certain time at a constant rate or adding the monomer solution to the reactor at a constant flow rate. There is no limitation on the method as long as the monomer solution can be continuously added to the reactor at a constant flow rate (or speed).

According to an embodiment of the present invention, the continuous addition of the monomer solution in step (S2) is initiated immediately after step (S1) and terminated when polymerization conversion rate is 50% to 75%, and immediately after step (S1) may mean after the internal temperature of the reactor is increased to a predetermined temperature, and in another sense, it may refer to the point in time when the polymerization conversion rate reaches a level of about 3% to 10%.

**In** addition, in terms of termination, when the continuous addition continues until the polymerization conversion rate exceeds 75%, imide-based monomers that are subsequently added may not participate in polymerization, which may cause an imbalance in composition between chains and an increase in residual monomer content, and thus the glass transition temperature may be reduced. When the continuous addition is terminated early before the polymerization conversion rate becomes 50%, an excessive amount of imide-based monomers is mixed into copolymer chains formed at the beginning, which may cause an imbalance in composition between chains. Therefore, continuously adding the monomer solution is preferably terminated when the polymerization conversion rate is 50% to 70% and may be preferably terminated when the polymerization conversion rate is 60% to 70%.

The imide-based monomer may be, for example, a maleimide-based monomer and may be, as a specific example, a maleimide-based monomer in which hydrogen bonded to the N atom of the maleimide is substituted with a substituent. As a more specific example, the imide-based monomer may be one or more selected from the group consisting of N-methyl maleimide, N-ethyl maleimide, N-propyl maleimide, N-isopropyl maleimide, N-butyl maleimide, N-isobutyl maleimide, N-t-butyl maleimide, N-cyclohexyl maleimide, N-chlorophenyl maleimide, N-methylphenyl maleimide, N-bromophenyl maleimide, N-lauryl maleimide, N-hydroxyphenyl maleimide, N-methoxyphenyl maleimide, N-carboxyphenyl maleimide, N-nitrophenyl maleimide, N-phenyl maleimide, 2-methyl-N-phenyl maleimide, N-benzyl maleimide, N-naphthyl maleimide and derivatives thereof, and may be N-phenylmaleimide as a specific example.

The imide-based monomer may be added in an amount of 1 part by weight to 50 parts by weight, 3 parts by weight to 40 parts by weight, or 5 parts by weight to 30 parts by weight, based on 100 parts by weight of the total amount of the monomers added in step (S1) and step (S2), and within this range, a copolymer may be prepared with a high polymerization conversion rate and a uniform composition of monomer units, and the prepared copolymer has excellent heat resistance.

According to an embodiment of the present invention, the above-described preparation method may be performed by suspension polymerization, and in addition to monomers, the reaction solution may further include one or more polymerization additives such as a polymerization initiator, a dispersant, a dispersion aid, or a molecular weight regulator, and further include a polymerization solvent, and the monomer solution may further include one or more of these additives.

According to an embodiment of the present invention, the polymerization initiator is used to easily initiate polymerization and is not particularly limited as long as the polymerization initiator does not adversely affect polymerization, and may be, for example, one or more selected from the group consisting of 2,5-dimethyl-2,5-di(t-butylperoxy)hexane, di(t-butylperoxy-isopropyl)benzene, t-butyl cumyl peroxide, di-(t-amyl)-peroxide, dicumyl peroxide, butyl 4,4-di(t-butylperoxy)valerate, t-butylperoxybenzoate, 2,2-di(t-butylperoxy)butane, t-amyl peroxy-benzoate, t-butylperoxy-acetate, t-butylperoxy-(2-ethylhexyl)carbonate, t-butylperoxy isopropyl carbonate, t-butyl peroxy-3,5,5-trimethyl-hexanoate, 1,1-di(t-butylperoxy)cyclohexane, t-amyl peroxyacetate, t-amylperoxy-(2-ethylhexyl)carbonate, 1,1-di(t-butylperoxy)-3,5,5-trimethylcyclohexane, 1,1-di(t-amylperoxy)cyclohexane, t-butyl-monoperoxy-malate, 1,1'-azodi(hexahydrobenzonitrile), and 1,1'-azobis(cyclohexane-1-cyclonitrile), and specifically, one or more selected from the group consisting of dicumyl peroxide, 1,1-di(t-butyl peroxy)cyclohexane, and 1,1'-azobis(cyclohexane carbonitrile).

The polymerization initiator may be used in an amount of 0.001 parts by weight to 0.5 parts by weight, specifically 0.003 parts by weight to 0.45 parts by weight, or 0.06 parts by weight to 0.25 parts by weight, based on 100 parts by weight of the total amount of monomers used in polymerization, and when the polymerization initiator is used within this range, the polymerization reaction may be carried out more easily, and thus the polymerization conversion rate may be increased.

According to an embodiment of the present invention, the dispersant in suspension polymerization is an additive that allows a suspension to be better dispersed in a solvent and may be, for example, one or more selected from the group consisting of water-soluble polyvinyl alcohol, partially saponified polyvinyl alcohol, polyacrylic acid, a copolymer of vinyl acetate and maleic anhydride, hydroxypropyl methylcellulose, gelatin, calcium phosphate, tricalcium phosphate, hydroxyapatite, sorbitan monolaurate, sorbitan trioleate, polyoxyethylene, sodium lauryl sulfate, sodium dodecylbenzenesulfonate, and sodium dioctylsulfosuccinate and may be tricalcium phosphate as a specific example and the same as the dispersant added before initiating polymerization.

The dispersant may be used in an amount of 0.5 parts by weight to 2.0 parts by weight, 0.5 parts by weight to 1.5 parts by weight, or 1.0 part by weight to 1.5 parts by weight, based on 100 parts by weight of a total amount of added monomers, and within this range, a copolymer with more uniform particles may be prepared by increasing the dispersion stability of the monomers in the polymerization system.

According to an embodiment of the present invention, the reaction solution may further include a dispersion aid, and as a specific example, the dispersion aid may be polyoxyethylene alkyl ether phosphate or sodium sulfate (Na₂SO₄) and more specifically sodium sulfate (Na₂SO₄) with excellent polymerization stability.

According to an embodiment of the present invention, the molecular weight regulator may be, for example, one or more selected from the group consisting of an α-methylstyrene dimer, t-dodecyl mercaptan, n-dodecyl mercaptan, octyl mercaptan, carbon tetrachloride, methylene chloride, methylene bromide, tetraethyl thiuram disulfide, dipentamethylene thiuram disulfide, and diisopropylxanthogen disulfide and may be t-dodecyl mercaptan as a specific example.

The molecular weight regulator may be used in an amount of 0.01 parts by weight to 0.40 parts by weight, 0.05 parts by weight to 0.30 parts by weight, or 0.10 to 0.25 parts by weight, based on 100 parts by weight of the total amount of added monomers, and within this range, a copolymer with an appropriate weight-average molecular weight may be prepared.

According to an embodiment of the present invention, the above-described preparation method may be carried out in the presence of a water-soluble solvent as a solvent for carrying out polymerization.

According to an embodiment of the present invention, the water-soluble solvent may be ion-exchanged water or deionized water. Meanwhile, according to an embodiment of the present invention, the monomer droplet may include a water-soluble solvent, and the water-soluble solvent may be ion-exchanged water or deionized water and the same as the water-soluble solvent added before initiating polymerization.

According to an embodiment of the present invention, an additional monomer may be further included to prepare a quaternary copolymer, and the additional monomer may be a vinyl cyanide-based monomer, which may be further included in the reaction solution to perform step (S1). The vinyl cyanide-based monomer may be one or more selected from the group consisting of acrylonitrile, methacrylonitrile, ethacrylonitrile, and derivatives thereof and may be acrylonitrile as a specific example.

The vinyl cyanide-based monomer may be added in an amount of 5 parts by weight to 70 parts by weight, 10 parts by weight to 60 parts by weight, 15 parts by weight to 50 parts by weight, or 15 parts by weight to 40 parts by weight, based on the total amount of added monomers, and within this range, a copolymer may be obtained with a high polymerization conversion rate, and compatibility with a thermoplastic resin is excellent while maintaining mechanical properties of the copolymer.

According to an embodiment of the present invention, the method of preparing the copolymer may be carried out in a polymerization reactor equipped with a stirrer. The stirrer may continuously provide a stirring force during the polymerization reaction, and the stirring speed of the stirrer may be 100 RPM to 1,000 RPM, 300 RPM to 800 RPM, or 400 RPM to 600 RPM, and within this range, a copolymer with more uniform particles may be prepared by increasing the dispersion stability of the monomers in the polymerization system.

According to an embodiment of the present invention, the polymerization in step (S1) and step (S2) may be carried out by increasing the temperature two or more times. Increasing the temperature may mean increasing the temperature inside the reactor where the polymerization reaction is performed, and increasing the temperature two or more times may mean increasing the temperature one or more times during the polymerization reaction after reaching the initial temperature, including the time of reaching the initial temperature. In this way, when polymerization is carried out by increasing the temperature two or more times, the polymerization reaction is prevented from explosively occurring, and it is easy to control the heat of reaction, and thus the polymerization reaction may be carried out in a mild state, and thereafter, increasing the temperature one or more times may increase the polymerization conversion rate.

According to an embodiment of the present invention, when the polymerization is carried out by increasing the temperature two or more times, the internal temperature of the reactor at the time of reaching the initial temperature may be 80 °C to 95 °C, 85 °C to 95 °C, or 90 °C to 95 °C, and within this range, excellent polymerization stability is achieved.

According to an embodiment of the present invention, when the polymerization is carried out by increasing the temperature two or more times and the temperature is increased one or more times during the polymerization reaction after reaching the initial temperature, the internal temperature of the reactor may be 100 °C to 130 °C, 110 °C to 130°C, or 115 °C to 125 °C, and within this range, it is possible to prepare a copolymer with a high polymerization conversion rate.

According to an embodiment of the present invention, the polymerization may be carried out until the polymerization conversion rate is 90% or more or 90% to 100%.

In this way, when a copolymer is prepared by the preparation method according to the present invention, it is possible to improve the heterogeneity of monomer units in the copolymer, maintain the polymerization reaction up to a high polymerization conversion rate, and remarkably reduce the content of residual monomers, and by preventing a decrease in the glass transition temperature, a copolymer with excellent heat resistance may be prepared.

The present invention provides a copolymer prepared by the above-described preparation method. Specifically, the copolymer may be a transparent heat-resistant copolymer including an alkyl (meth)acrylate-based monomer unit and an imide-based monomer unit, and, as a more specific example, may be a transparent heat-resistant styrene-based copolymer.

According to the present invention, provided is a copolymer which includes an alkyl (meth)acrylate-based monomer unit, an aromatic vinyl-based monomer unit, and an imide-based monomer unit, has a chromaticity a value of -0.50 to -0.10 and a chromaticity b value of 1.0 to 4.0, measured using a colorimeter, and has a glass transition temperature of 110 °C to 135 °C.

According to an embodiment of the present invention, the chromaticity values measured using a colorimeter are L, a, and b, representing white (+100) to black (0), red (+100) to green (-80), and yellow (+70) to blue (-80), respectively. The copolymer of the present invention may preferably have a chromaticity a value of -0.45 to -0.20 or -0.43 to -0.27 and a chromaticity b value of 1.2 to 3.5 or 1.5 to 3.0.

According to an embodiment of the present invention, the copolymer may include residual monomers and derivatives thereof in an amount of 500 ppm or less based on weight. When the copolymer is prepared by the above-described preparation method, the content of residual monomers and/or derivatives thereof may be significantly reduced, preferably to 400 ppm or less, more preferably 370 ppm or less. When the content of residual monomers is this low, transparency may be excellent, and discoloration may be less likely to occur, and problems such as an odor during the process may be prevented.

The copolymer may be a random copolymer and have uniform composition of alkyl (meth)acrylate-based monomer units, aromatic vinyl-based monomer units, and imide-based monomer units. Uniform composition of the monomer units may mean that the proportion of each monomer unit present in the growing polymer, which is polymerized by the polymerization reaction, remains constant. In a specific example, while polymerization progresses, that is, over the polymerization time, whenever a portion of the polymer in the reactor is collected as a sample, the proportion of each monomer unit forming the polymer remains constant.

According to an embodiment of the present invention, the alkyl (meth)acrylate-based monomer unit, aromatic vinyl-based monomer unit, and imide-based monomer unit may be a repeating unit formed by each monomer participating in the polymerization reaction. As a specific example, the polymerization reaction may be a radical polymerization reaction, and thus the repeating unit may be derived from carbon-carbon double bonds present in each monomer.

According to an embodiment of the present invention, the copolymer may further include a vinyl cyanide-based monomer unit. When the vinyl cyanide-based monomer unit is included, excellent mechanical properties such as impact strength and tensile strength may be secured, and due to improved flowability, there may be advantages in molding such as injection or extrusion.

### Thermoplastic resin composition

A resin composition according to the present invention includes the above-described acrylic-imide copolymer and a thermoplastic resin. The resin composition may be prepared by mixing various resins depending on the desired use, for example, an acrylonitrile-butadiene-styrene-based resin, acrylonitrile-styrene-acrylate-based resin, styrene-acrylonitrile-based resin, and the like may be used together, and a resin copolymerized with an alkyl (meth)acrylate-based monomer or a maleimide-based monomer may be utilized but is not particularly limited thereto.

According to an embodiment of the present invention, if necessary, the resin composition may further include one or more additives selected from the group consisting of an impact modifier, a lubricant, a heat stabilizer, an anti-dripping agent, an antioxidant, a light stabilizer, an ultraviolet ray blocker, a pigment, an inorganic filler, and the additive may be used in an amount of 5.0 parts by weight or less, or 0.1 parts by weight to 1.0 parts by weight, based on 100 parts by weight of the copolymer and thermoplastic resin.

In addition, the additive may be used without particular limitation as long as it is used for the resin composition and, for example, the anti-dripping agent may be one or more selected from the group consisting of Teflon, polyamide, polysilicon, polytetrafluoroethylene (PTFE), and tetrafluoroethylene-hexafluoropropylene (TFE-HFP) copolymer to improve flame retardancy, and the inorganic filler may be one or more selected from the group consisting of barium sulfate, barium glass filler, and barium oxide.

### Examples

Hereinafter, examples of the present invention will be described in detail so that those skilled in the art can easily carry out the present invention. However, the present invention may be embodied in several different forms and is not limited to the examples described herein.

### Example 1

136 parts by weight of ion-exchanged water, 77 parts by weight of methyl methacrylate, 13 parts by weight of styrene, 0.06 parts by weight of 1,1-di(t-butylperoxy)cyclohexane as a polymerization initiator, 0.05 parts by weight of a copolymer (copolymer of acrylic acid and 2-ethylhexyl acrylate) having a weight-average molecular weight of about 1,850,000 g/mol as a dispersant, and 0.5 parts by weight of Na₂SO₄ as a dispersion aid were uniformly mixed to prepare a reaction solution, and a buffer was prepared by uniformly mixing 0.1 parts by weight of a mixture of acetic acid and sodium acetate, and then mixed with the reaction solution, and the resulting mixture was input into a reactor, and then the internal temperature of the reactor was increased to 90 °C to initiate polymerization. From the time when the internal temperature of the reactor reached 90 °C, 10 parts by weight of N-phenyl maleimide was continuously added at a constant rate of about 3.33 parts by weight/hr for 180 minutes until the polymerization conversion rate was 65%. After terminating the continuous addition of the N-phenyl maleimide, polymerization was performed for another 30 minutes while the temperature of the reactor was maintained at 90 °C, and after increasing the temperature of the reactor to 95 °C at a constant rate for 10 minutes, polymerization was further performed for 50 minutes while the temperature was maintained at 95 °C. Then, to further increase the conversion rate, the temperature was increased to 120 °C and polymerization was continued for another 2 hours before the polymerization was terminated. After polymerization was completed, the polymerization slurry was washed with water, dehydrated, and dried to prepare a bead-shaped copolymer.

Each part by weight is based on 100 parts by weight of the total amount of added monomers.

### Example 2

A copolymer was prepared in the same manner as in Example 1, except that a mixture of citric acid and sodium citrate was used as a buffer.

### Example 3

A copolymer was prepared in the same manner as in Example 1, except that a mixture of sodium carbonate and sodium bicarbonate was used as a buffer.

### Example 4

A copolymer was prepared in the same manner as in Example 1, except that 10 parts by weight of N-phenyl maleimide was continuously added at a constant rate until the polymerization conversion rate was 55%.

### Example 5

A copolymer was prepared in the same manner as in Example 1, except that 10 parts by weight of N-phenyl maleimide was continuously added at a constant rate until the polymerization conversion rate was 70%.

### Comparative Example 1

A copolymer was prepared in the same manner as in Example 1, except that a buffer was not used.

### Comparative Example 2

A copolymer was prepared in the same manner as in Example 1, except that a mixture of Na₂HPO₄ and NaH₂PO₄ was used as a buffer.

### Comparative Example 3

A copolymer was prepared in the same manner as in Example 1, except that a mixture of citric acid and Na₂HPO₄ was used as a buffer.

### Comparative Example 4

A copolymer was prepared in the same manner as in Comparative Example 1, except that 13 parts by weight of N-phenyl maleimide was added to the reaction solution, and after increasing the temperature of the reactor, the monomer solution was not added.

### Comparative Example 5

A copolymer was prepared in the same manner as in Example 1, except that 13 parts by weight of N-phenyl maleimide was added to the reaction solution, and after increasing the temperature of the reactor, the monomer solution was not added.

### Experimental Example 1

For each copolymer prepared in Examples 1 to 6 and Comparative Examples 1 to 4, the glass transition temperature, residual monomer content, and transparency were measured by the following methods and results thereof are shown in Table 1 below.
(1) Glass transition temperature (Tg, °C): After collecting 0.01 g samples from polymers and copolymers, each sample was heated from room temperature (20 °C to 25 °C) to 180 °C using a differential scanning calorimeter (DSC) (from Mettler Toledo) to remove foreign substances, and then each sample was cooled to room temperature (20 °C to 25 °C) and heated to 180 °C again to measure the glass transition temperature.
(2) Residual monomer content (wt%): After polymerization, each bead-shaped copolymer was dissolved in chloroform, and methanol was added to precipitate the polymer resin, and then a portion of the supernatant in which residual monomers were dissolved was taken as a sample, and the content of residual monomers of each sample was calculated using a gas chromatography device (Agilent 6890N (GC-FID) commercially available from Agilent Technologies, Inc.) under the following measurement conditions.
   - Inlet: 280 °C, carrier gas He, split ratio 10:1
   - Column: HP-5 capillary column
   - Flow rate: 1.4 mL/min
   - Oven: Isothermal at 100 °C for 3 minutes, heated to 300 °C at a rate of 10 °C/min, isothermal at 300 °C for 5 minutes
   - Detector: FID, 250 °C
(3) Chromaticity (a, b): Values a and b were measured using a colorimeter (HunterLab). Value a represents redness (red +100 to -80 green), and value b represents yellowness (yellow +70 to -80 blue).
(4) Transparency: The total light transmittance (Tt) of each prepared copolymer was measured using a haze meter.

**[Table 1]**

| | Residual monomer (wt%) | | | Tg (°C) | Chromaticity | | Transparency (Tt) |
|---|---|---|---|---|---|---|---|
| | PMI | NPSI | Aniline | | Color a | Color b | |
| Example 1 | 29 | 39 | 308 | 127.4 | -0.38 | 2.3 | 91.2 |
| Example 2 | 27 | 38 | 289 | 127.3 | -0.36 | 2.3 | 91.5 |
| Example 3 | 24 | 27 | 299 | 127.3 | -0.32 | 2.5 | 91.4 |
| Example 4 | 18 | 34 | 285 | 126.5 | -0.30 | 2.3 | 91.2 |
| Example 5 | 34 | 51 | 331 | 126.8 | -0.35 | 2.8 | 91.3 |
| Comparative Example 1 | 51 | 60 | 647 | 126.2 | -0.58 | 4.8 | 91.2 |
| Comparative Example 2 | 21 | 31 | 264 | 127.7 | -0.32 | 2.5 | 88.9 |
| Comparative Example 3 | 23 | 33 | 255 | 127.6 | -0.30 | 2.1 | 89.4 |
| Comparative Example 4 | 63 | 69 | 824 | 129.4 | -0.89 | 5.6 | 83.3 |
| Comparative Example 5 | 19 | 25 | 247 | 130.8 | -0.61 | 3.5 | 84.4 |

As shown in Table 1, it can be seen that Examples 1 to 5, which were prepared by the method of preparing the copolymer according to the present invention, had significantly low residual monomer contents compared to Comparative Examples and exhibited excellent chromaticity characteristics with a uniform glass transition temperature. In addition, transparency was confirmed to be excellent.

On the other hand, when a phosphorus-based antioxidant was used as in Comparative Examples 2 and 3, other characteristics may be similar to those of Examples, but transparency may be poor, and in particular, considering that transparent but flawed products are bound to be defective products, it can be seen that using a non-phosphate-based buffering agent may cause problems during the process of manufacturing products due to the generation of insoluble salts. In addition, it can be seen that Comparative Examples 1 to 4, in which a buffer was not used, had high residual monomer content and poor chromaticity characteristics, and Comparative Example 5, in which a butter was used but a monomer solution was not continuously added, had reduced residual monomer content but poor chromaticity characteristics and transparency.

From the results, it was confirmed when the buffer including a non-phosphate-based buffering agent is appropriately applied simultaneously with the monomer solution, heat resistance is secured due to the glass transition temperature appearing above a certain level, and a copolymer with low residual monomer content and excellent chromaticity characteristics and transparency is obtained.

## Claims

1. A method of preparing an acrylic-imide copolymer, comprising:
initiating polymerization by adding a reaction solution, which includes an alkyl (meth)acrylate-based monomer and an aromatic vinyl-based monomer, and a buffer to a reactor (S1); and
performing polymerization while continuously adding a monomer solution including an imide-based monomer to the reactor (S2),
wherein the monomer solution of step (S2) is continuously added after step (S1) until a polymerization conversion rate is 50% to 75%, and the buffer includes two or more non-phosphate-based buffering agents.

2. The method of claim 1, wherein the buffering agent is two or more agents selected from the group consisting of acetic acid, citric acid, sodium acetate, sodium citrate, sodium carbonate, and sodium bicarbonate.

3. The method of claim 1, wherein the buffering agent is a combination of acetic acid and sodium acetate, a combination of citric acid and sodium citrate, or a combination of sodium carbonate and sodium bicarbonate.

4. The method of claim 1, wherein the monomer solution is continuously added until the polymerization conversion rate is 55% to 70%.

5. The method of claim 1, wherein the imide-based monomer of step (S2) is included in an amount of 1 part by weight to 50 parts by weight based on 100 parts by weight of a total amount of added monomers.

6. The method of claim 1, wherein the reaction solution of step (S1) further includes one or more of a polymerization initiator, a dispersant, and a molecular weight regulator.

7. The method of claim 1, wherein the monomer solution of step (S2) further includes one or more of a polymerization initiator, a dispersant, and a molecular weight regulator.

8. The method of claim 1, wherein the reaction solution of step (S1) further includes a vinyl cyanide-based monomer.

9. The method of claim 1, wherein the polymerization is performed by suspension polymerization.

10. A thermoplastic resin composition comprising an acrylic-imide copolymer prepared according to the method of claim 1.
